# EUROPEAN PATENT APPLICATION

(11) **EP 2 741 181 A1**
(43) Date of publication of application: **11.06.2014**
(21) Application number: 12850604.5
(22) Date of filing: 01.10.2012
(51) Int. Cl.: G06F 3/041, G06F 3/044

(54) **TOUCH PANEL**

(30) Priority: 16.11.2011 JP 2011250699
(71) Applicant: Japan Aviation Electronics Industry, Limited, Tokyo 150-0043 (JP)
(72) Inventor: TAKIGUCHI, Tsuyoshi, Tokyo 150-0043 (JP); SATO, Mitsunori, Tokyo 150-0043 (JP); IWAO, Naoki, Tokyo 150-0043 (JP)
(74) Representative: MERH-IP Matias Erny Reichl Hoffmann
(86) International application number: PCT/JP2012/075343
(87) International publication number: WO 2013/073299

(57) **Abstract**

A touch panel that is less likely to fail even in a hot and humid environment is provided. A touch panel of the present invention is provided with a transparent substrate, a plurality of sensor electrodes, a plurality of terminals, a plurality of conductive wires, and a plurality of auxiliary wires. The sensor electrodes are made with transparent conductive members arranged and formed in a detection region on the substrate. The terminals are formed in a wiring region on the substrate, in order to be connected to an external part, and correspond to the respective sensor electrodes. The conductive wires are formed in the wiring region on the substrate, and electrically connect any of the sensor electrodes and the terminal corresponding to the sensor electrode. The auxiliary wires are formed in the wiring region on the substrate, and electrically connect any of the sensor electrodes and the terminal corresponding to the sensor electrode. The conductive wires are of a material having electrical resistivity lower than that of the auxiliary wires, and the auxiliary wires are of a material less prone to corrosion than that of the conductive wires. Further, portions in contact with the substrate and portions in contact with the external part in the terminals may be of the same material as the auxiliary wires.

## Description

### [TECHNICAL FIELD]

The present invention relates to a touch panel having a wiring region formed around a detection region.

### [BACKGROUND ART]

As a touch panel having a wiring region formed around a detection region, a touch panel shown in Patent Literature 1 and the like are known. Fig. 1A is a diagram illustrated in Fig. 1(a) of Patent Literature 1 and Fig. 1B is a diagram illustrated in Fig. 1(b) in Patent Literature 1, and paragraphs 0020, 0021, and 0029 in Patent Literature 1 includes the description: "a display device 100 with an input device generally has a liquid crystal device 50 as an image generation device and a panel-like input device 10 (touch panel) disposed on a surface on the display light emitting side in the image generation device.... The input device 10 is a capacitive touch panel, and is provided with one translucent substrate 15 and a flexible substrate 19 connected to an end of the translucent substrate 15. To the flexible substrate 19, a driving circuit (not shown) to carry out detection of an input position in the input device 10 is connected. In the input device 10, an input surface 10b is configured with an upper surface of the translucent substrate 15, and an approximately center region of the input surface 10b of the translucent substrate 15 is an input region 10a where an input by a fingertip is carried out.... In a region outside the input region 10a in the translucent substrate 15, a plurality of metal wires 9a electrically connected to each of a first translucent electrode pattern 11 and a second translucent electrode pattern 12 are formed, and ends of these metal wires 9a configure terminals 19a to connect the flexible substrate 19".

### [PRIOR ART LITERATURE]

### [PATENT LITERATURE]

Patent literature 1: Japanese Patent Application Laid Open No. 2008-310550

### [SUMMARY OF THE INVENTION]

### [PROBLEMS TO BE SOLVED BY THE INVENTION]

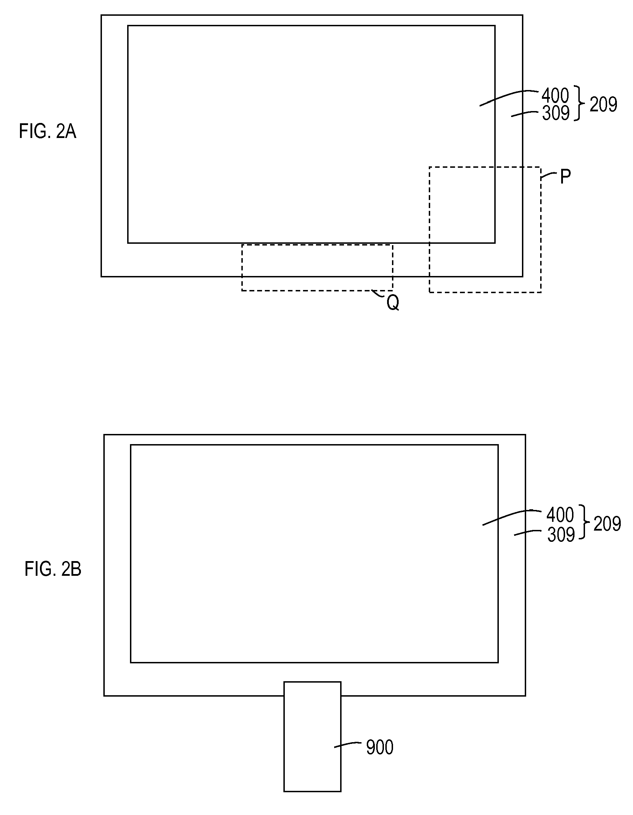

Next, descriptions are given to problems to be solved by the invention with a representation of a general configuration of a conventional technique. Fig. 2A and Fig. 2B are diagrams illustrating an outline of a touch panel. Fig. 2A is a diagram only showing a touch panel 209, and Fig. 2B is a diagram of the touch panel 209 with an external substrate 900 connected thereto. The touch panel 209 has a detection region 400 and a wiring region 309. Then, the external substrate 900 is connected to a part of the wiring region 309. The external substrate 900 is generally bonded by thermocompression using an anisotropic conductive film (ACF).

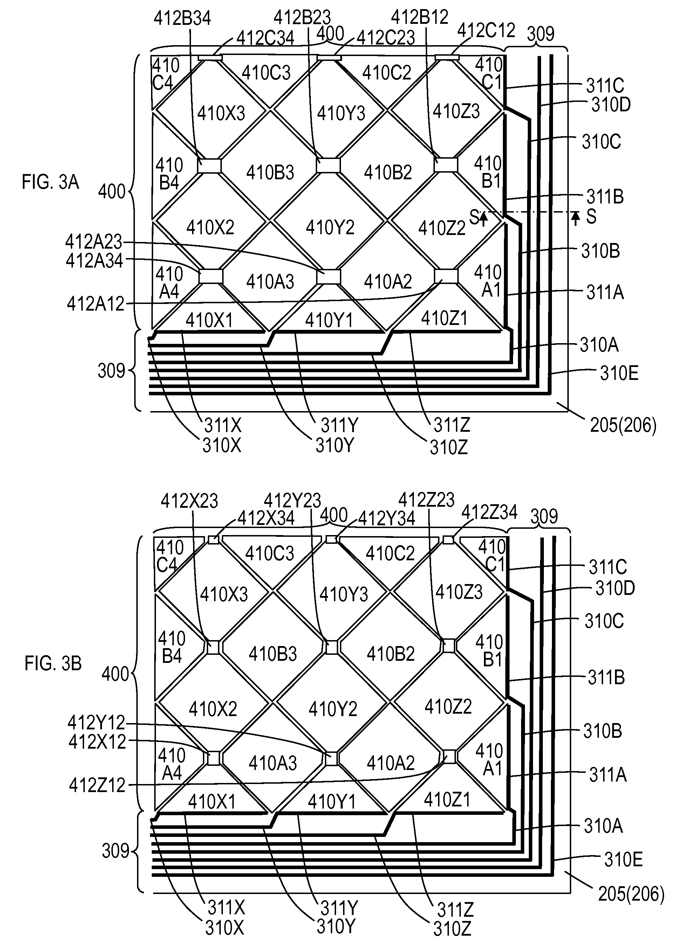

Fig. 3A and Fig. 3B are enlarged views of a region P indicated by a dotted line in Fig. 2A. Fig. 3A is a diagram of the region P viewed from the front. The touch panel 209 is formed with a transparent substrate 205 (for example, a glass substrate), an electrode formed thereon, and the like. In the detection region 400 of the substrate 205, a plurality of sensor electrodes are arranged and formed. Specifically, in the horizontal direction of Fig. 3A and Fig. 3B, individual electrodes 410A1, 410A2, 410A3, 410A4, ..., for example, are disposed. Then, an individual connection electrode 412A12 connects the individual electrode 410A1 and the individual electrode 410A2. An individual connection electrode 412A23 connects the individual electrode 410A2 and the individual electrode 410A3. The connection of the individual electrodes and the individual connection electrodes in such a manner forms a sensor electrode 410A extending in the horizontal direction. The individual connection electrodes (for example, 412A12) for the sensor electrodes extending in the horizontal direction (for example, 410A) are formed in a layer different from the individual electrodes (410A1, 410A2, 410Z1, 410Z2, and so forth), so as not to be in contact with the individual electrodes disposed in the vertical direction (for example, 410Z1, 410Z2). Fig. 3B is a diagram of the region P viewed from the front, without the individual connection electrodes for the sensor electrodes extending in the horizontal direction. In the vertical direction of Fig. 3A and Fig. 3B, individual electrodes 410Z1, 410Z2, 410Z3, ..., for example, are disposed. Then, an individual connection electrode 412Z12 connects the individual electrode 410Z1 and the individual electrode 410Z2. An individual connection electrode 412Z23 connects the individual electrode 410Z2 and the individual electrode 410Z3. The connection of the individual electrodes and the individual connection electrodes in such a manner forms a sensor electrode 410Z extending in the vertical direction. The individual connection electrodes (for example, 412Z12) for the sensor electrodes extending in the vertical direction (for example, 410Z) are formed in the same layer as the individual electrodes (410A1, 410A2, 410Z1, 410Z2, and so forth), so as not to be in contact with the individual electrodes disposed in the horizontal direction (for example, 410A1, 410A2). In the descriptions below, when collectively mentioning the sensor electrodes, they are expressed as the plurality of sensor electrodes 410.

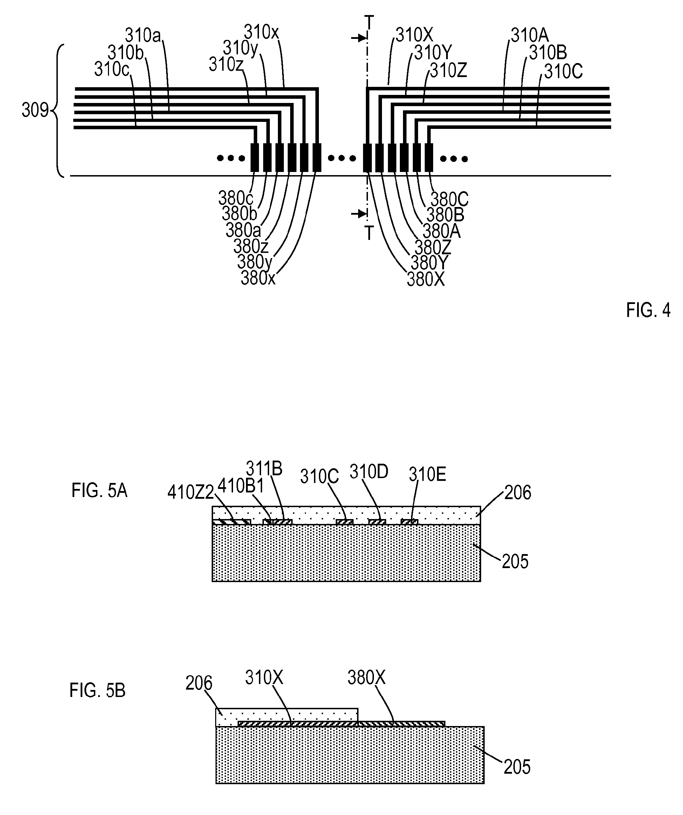

Fig. 4 is an enlarged view of a region Q indicated by a dotted line in Fig. 2A. In a wiring region on the substrate 205, terminals 380C, 380B, 380A, 380Z, 380Y, 380X, 380c, 380b, 380a, 380z, 380y, 380x to be connected to the external substrate 900 are formed. Then, conductive wires (for example, 310A) electrically connect the sensor electrodes (for example, 410A) and the terminals (for example, 380A). In this case, in order to ensure the electrical connection of the conductive wires (for example, 310A) and the sensor electrodes (for example, 410A), connection sections (for example, 311A) of the same material as the conductive wires are formed. The sensor electrodes (for example, 410A) are portions of the touch panel 209 where a person touches and formed with a transparent conductive member (for example, indium tin oxide (ITO)) so as to provide a view of an image displayed on a liquid crystal device (not shown) disposed on a lower surface of the touch panel 209. In the meanwhile, since the conductive wires do not have to be transparent, they are formed with low resistivity metal (for example, aluminum) in general. The terminals are also formed with the same material as the conductive wires.

Fig. 5A and Fig. 5B are diagrams illustrating partial cross sections of the touch panel. Fig. 5A is a cross sectional view along line S-S in Fig. 3A, and Fig. 5B is a cross sectional view along line T-T in Fig. 4. The individual electrodes 410Z2, 410B1, a connection section 311B, the conductive wires 310C, 310D, 310E, 310X, and the terminal 380X are formed on the substrate 205. In addition, a protective film 206 covers the entire substrate, except for the portions required to connect the terminals (for example, 380X) to the external substrate.

However, there is a problem in that the conductive wires formed with metal are prone to corrosion. Accordingly, if left in high temperature and humidity for a long period of time, the conductive wires may be broken, possibly causing a failure. Further, since the terminals are not covered with a protective film, they are even more prone to corrosion, possibly causing poor contact with the external substrate.

It is an object of the present invention to provide a touch panel that is less likely to fail even in high temperature and humidity.

### [MEANS TO SOLVE THE PROBLEMS]

A touch panel of the present invention is provided with a transparent substrate, a plurality of sensor electrodes, a plurality of terminals, a plurality of conductive wires, and a plurality of auxiliary wires. The substrate has a size including a detection region and a wiring region. The sensor electrodes are made with transparent conductive members arranged and formed in the detection region. The terminals are formed in the wiring region, in order to be connected to an external part, and correspond to the respective sensor electrodes. The conductive wires are formed in the wiring region, and electrically connect any of the sensor electrodes and the terminal corresponding to the sensor electrode. The auxiliary wires are formed in the wiring region, and electrically connect any of the sensor electrodes and the terminal corresponding to the sensor electrode. Then, the conductive wires are formed with a material having electrical resistivity lower than that of the auxiliary wires, and the auxiliary wires are formed with a material less prone to corrosion than that of the conductive wires. Further, portions in contact with the substrate and portions in contact with the external part in the terminals may be of the same material as the auxiliary wires.

### [EFFECTS OF THE INVENTION]

According to a touch panel of the present invention, electrical connection is made between sensor electrodes and terminals by combining a material that is prone to corrosion but low in resistivity and a material that is high in resistivity but less prone to corrosion. Accordingly, there is no possibility of a sudden failure due to corrosion of conductive wires. In addition, when portions in contact with a substrate and portions in contact with an external part in the terminals are of a material less prone to corrosion, it is possible to reduce the risk of causing poor contact with the external part.

### [BRIEF DESCRIPTION OF THE DRAWINGS]

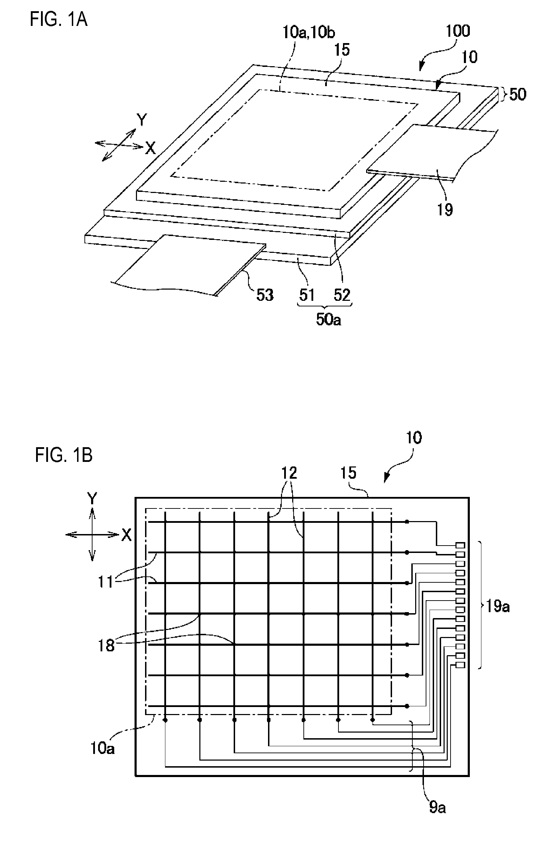

Fig. 1A is a diagram illustrated in Fig. 1(a) of Patent Literature 1. Fig. 1B is a diagram illustrated in Fig. 1(b) of Patent Literature 1.
Fig. 2A is a diagram illustrating an outline of a touch panel, with only the touch panel 209 being shown. Fig. 2B is a diagram illustrating an outline of the touch panel, with the touch panel 209 being connected to the external substrate 900.
Fig. 3 is an enlarged view of a region P indicated by a dotted line in Fig. 2A, the region P being viewed from the front. Fig. 3B is an enlarged view of the region P indicated by a dotted line in Fig. 2A, the region P being viewed from the front, without individual connection electrodes for sensor electrodes extending in the horizontal direction.
Fig. 4 is an enlarged view of a region Q indicated by a dotted line in Fig. 2A.
Fig. 5A is a cross sectional view along line S-S in Fig. 3A. Fig. 5B is a cross sectional view along line T-T in Fig. 4.
Fig. 6 is a diagram illustrating an outline of a touch panel in a first embodiment.
Fig. 7 is an enlarged view of a region P indicated by a dotted line in Fig. 6.
Fig. 8 is an enlarged view of a region R indicated by a dotted line in Fig. 7.
Fig. 9 is an enlarged view of a region Q indicated by a dotted line in Fig. 6.
Fig. 10A is a cross sectional view along line S-S in Fig. 7. Fig. 10B is a cross sectional view along line T-T in Fig. 9.
Fig. 11 is a diagram illustrating an outline of a touch panel in a second embodiment.
Fig. 12 is an enlarged view of a region P indicated by a dotted line in Fig. 11.
Fig. 13 is an enlarged view of a region Q indicated by a dotted line in Fig. 11.
Fig. 14A is a cross sectional view along line S-S in Fig. 12. Fig. 14B is a cross sectional view along line T-T in Fig. 13.
Fig. 15 is a diagram illustrating an outline of a touch panel in a third embodiment.
Fig. 16 is an enlarged view of a region P indicated by a dotted line in Fig. 15.
Fig. 17 is an enlarged view of a region Q indicated by a dotted line in Fig. 15.
Fig. 18A is a cross sectional view along line S-S in Fig. 16. Fig. 18B is a cross sectional view along line T-T in Fig. 17.
Fig. 19 is a diagram illustrating an outline of a touch panel in a fourth embodiment.
Fig. 20 is an enlarged view of a region P indicated by a dotted line in Fig. 19.
Fig. 21 is an enlarged view of a region Q indicated by a dotted line in Fig. 19.
Fig. 22A is a cross sectional view along line S-S in Fig. 20. Fig. 22B is a cross sectional view along line T-T in Fig. 21.
Fig. 23 is a partial cross sectional view of a touch panel of a modification of the fourth embodiment.

### [DETAILED DESCRIPTION OF THE EMBODIMENTS]

Detailed descriptions are given below to embodiments of the present invention. Components that are the same in function are denoted by the same reference numerals and repetitive descriptions are omitted.

### [FIRST EMBODIMENT]

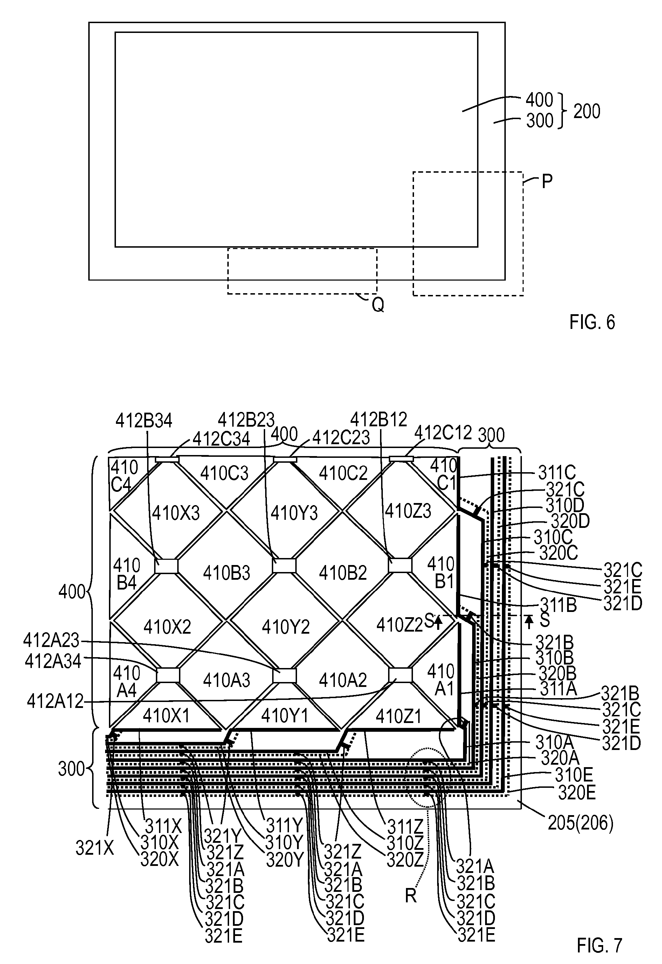

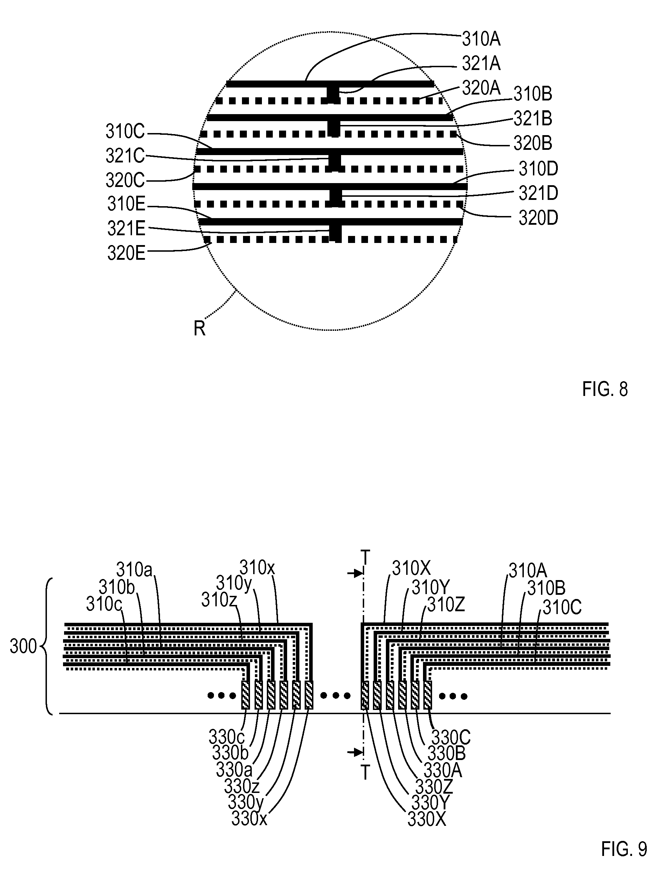

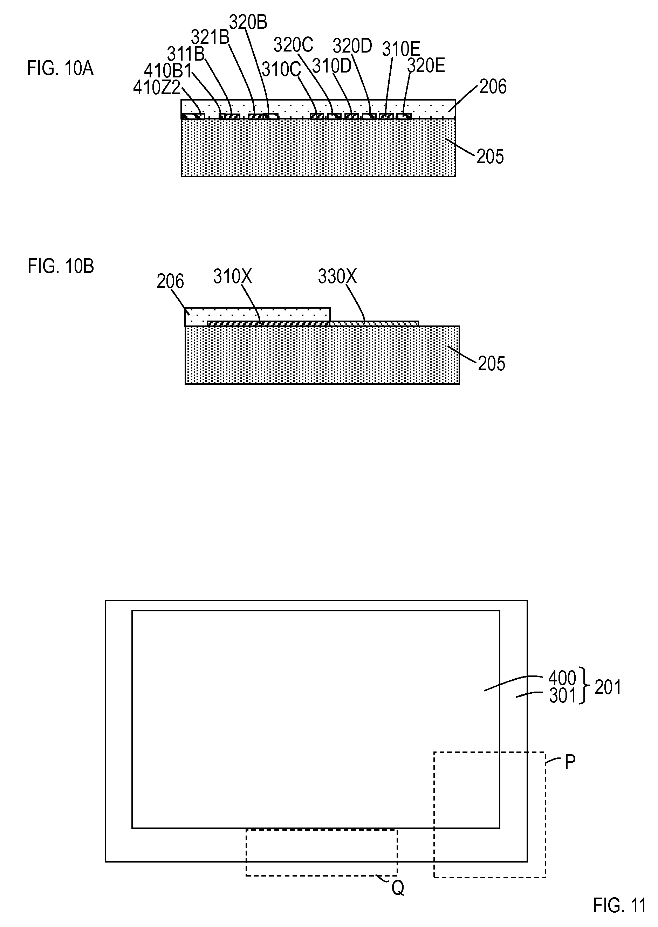

Fig. 6 is a diagram illustrating an outline of a touch panel in a first embodiment. A touch panel 200 has a detection region 400 and a wiring region 300. Then, an external substrate 900 (not shown) is connected to a part of the wiring region 300. For example, the external substrate 900 may be bonded by thermocompression using an anisotropic conductive film (ACF). Fig. 7 is an enlarged view of a region P indicated by a dotted line in Fig. 6, Fig. 8 is an enlarged view of a region R indicated by a dotted line in Fig. 7, and Fig. 9 is an enlarged view of a region Q indicated by a dotted line in Fig. 6. Fig. 10A and Fig. 10B are partial cross sectional views of the touch panel in the first embodiment. Fig. 10A is a cross sectional view along line S-S in Fig. 7, and Fig. 10B is a cross sectional view along line T-T in Fig. 9. The touch panel 200 in the first embodiment is provided with a transparent substrate 205, a plurality of sensor electrodes 410, a plurality of terminals 330, a plurality of conductive wires 310, a plurality of auxiliary wires 320, and a protective film 206. The substrate 205 has a size including both the detection region 400 and the wiring region 300. The substrate 205 may be made with not only a hard material such as a glass substrate, but also a soft material such as a resin film.

The plurality of sensor electrodes 410 are the same as those of the conventional touch panel illustrated in Fig. 3A and Fig. 3B. The plurality of sensor electrodes 410 are configured with sensor electrodes 410A, 410B, 410C, 410X, 410Y, 410Z, .... The sensor electrode 410A is configured with individual electrodes 410A1, 410A2, 410A3, ... and individual connection electrodes 412A12, 412A23, .... The sensor electrode 410Z is configured with individual electrodes 410Z1, 410Z2, 410Z3, ... and individual connection electrodes 412Z12, 412Z23, ... (refer to Fig. 3B). The plurality of sensor electrodes 410 are made with transparent conductive members arranged and formed in the detection region 400 on the substrate 205. Specifically, indium tin oxide (ITO) or the like may be used. Details are omitted because they are the same as the above descriptions using Fig. 3A and Fig. 3B. Although A, B, C are used to denote sensor electrodes extending in the horizontal direction and Z, Y, X are used to denote sensor electrodes extending in the vertical direction in the drawings, they were used only for discrimination, and the number of sensor electrodes does not depend on the number of alphabets.

The plurality of terminals 330 are configured with terminals 330A, 330B, 330C, 330X, 330Y, 330Z, 330a, 330b, 330c, 330x, 330y, 330z, .... Each terminal is formed in the wiring region 300 on the substrate 205, in order to be connected to an external part, and corresponds to any of the sensor electrodes. For example, the terminal 330A corresponds to the sensor electrode 410A.

The plurality of conductive wires 310 are configured with conductive wires 310A, 310B, 310C, 310D, 310E, 310X, 310Y, 310Z, .... Each conductive wire is formed in the wiring region 300 on the substrate 205 and electrically connects any of the sensor electrodes and the terminal corresponding to the sensor electrode. For example, the conductive wire 310A electrically connects the sensor electrode 410A and the terminal 330A. In addition, in order to ensure the electrical connection between the conductive wire 310A and the sensor electrode 410A, a connection section (for example, 311A) of the same material as the conductive wire may be formed.

The plurality of auxiliary wires 320 are configured with auxiliary wires 320A, 320B, 320C, 320D, 320E, 320X, 320Y, 320Z, .... Each auxiliary wire is formed in the wiring region 300 on the substrate 205 and electrically connects any of the sensor electrodes and the terminal corresponding to the sensor electrode. For example, the auxiliary wire 320A electrically connects the sensor electrode 410A and the terminal 330A.

In the present embodiment, as illustrated in Fig. 10A, the individual electrodes 410Z2, 410B1, the connection section 311B, conductive wires 310C, 310D, 310E, 310X, the auxiliary wires 320B, 320C, 320D, 320E, and the terminal 330X are formed directly on the substrate 205. In addition, a protective film 206 covers the entire substrate, except for the portions required to connect the terminals (for example, 330X) to the external substrate.

Then, the conductive wires are formed with a material having electrical resistivity lower than that of the auxiliary wires, and the auxiliary wires are formed with a material less prone to corrosion than that of the conductive wires (a material excellent in durability). In addition, at least portions in contact with the substrate and portions in contact with the external part in the terminals may be of a material less prone to corrosion (the same material as the auxiliary wires), and the entire terminals may be formed with one material or may have a layered structure with a plurality of materials. More specifically, metal such as aluminum, copper, or silver or an alloy of aluminum may be used for the conductive wires. Examples of aluminum alloys include an alloy of aluminum and niobium. Alloys of molybdenum and niobium with an alloy of aluminum and niobium interposed therebetween may also be used for the conductive wires. Use of ITO or carbon makes the auxiliary wires and the terminals less prone to corrosion. For pattern formation of the conductive wires and the auxiliary wires, techniques such as sputtering, etching, and printing may be used depending on the material. If the material of the auxiliary wires and the terminals is the same as the sensor electrodes, when the individual electrodes (for example, 410A1, 410A2, and so forth) of the plurality of sensor electrodes 410 are formed, the auxiliary wires and the terminals may also be formed.

The protective film 206 covers the entire substrate, except for the portions that have to be exposed to connect the plurality of terminals 330 to the external substrate. For the protective film 206, if a material resistant to acid and alkali is desired, an organic material, such as an acrylic material, may be used. If a material resistant to moisture is desired, an inorganic material, such as SiO₂ or SiOX, may be used. The protective film 206 may also have two or more layers including a layer formed with the organic material and a layer formed with the inorganic material. Use of such a protective film makes it possible to form a protective film resistant to moisture as well as acid and alkali.

According to the touch panel 200 in the first embodiment, electrical connection is made between the plurality of sensor electrodes 410 and the plurality of terminals 330 by combining the material that is prone to corrosion but low in resistivity and the material that is high in resistivity but less prone to corrosion. Accordingly, there is no possibility of a sudden failure due to corrosion of the conductive wires. In addition, when portions in contact with the substrate 205 and portions in contact with the external part in the plurality of terminals 330 are of a material less prone to corrosion (a material excellent in durability), it is possible to prevent corrosion of the plurality of exposed terminals 330. Further, even when the substrate 205 is glass, it is possible to prevent corrosion of the plurality of terminals 330 due to the influence of sodium ions and the like from the substrate 205. Accordingly, it is possible to reduce the risk of causing poor contact with the external part.

### [MODIFICATION]

In the touch panel in the first embodiment, the plurality of conductive wires 310 and the plurality of auxiliary wires 320 are separately formed directly on the substrate 205, respectively. In such a case, the conductive wire (for example, 310A) and auxiliary wire (for example, 320A) that electrically connect the same sensor electrode (for example, 410A) and terminal (for example, 330A) may be provided with a portion (for example, 321A) to be electrically connected between the sensor electrode (for example, 410A) and terminal (for example, 330A) (refer to Figs. 7 through 9).

With such a structure, in the case of a break in a part of the conductive wires, the broken section (between two electrically connected portions) is electrically connected only by the auxiliary wire while the unbroken sections are electrically connected also by the conductive wires. Accordingly, it is possible to suppress an increase in the electrical resistance due to the break. Therefore, a failure is even less likely to occur than in the touch panel in the first embodiment.

### [SECOND EMBODIMENT]

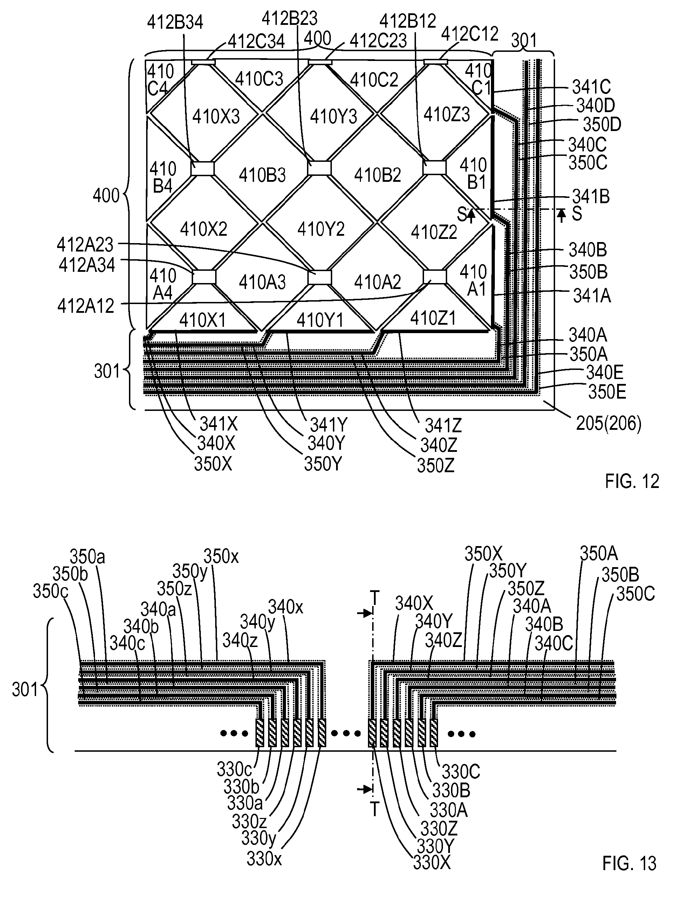

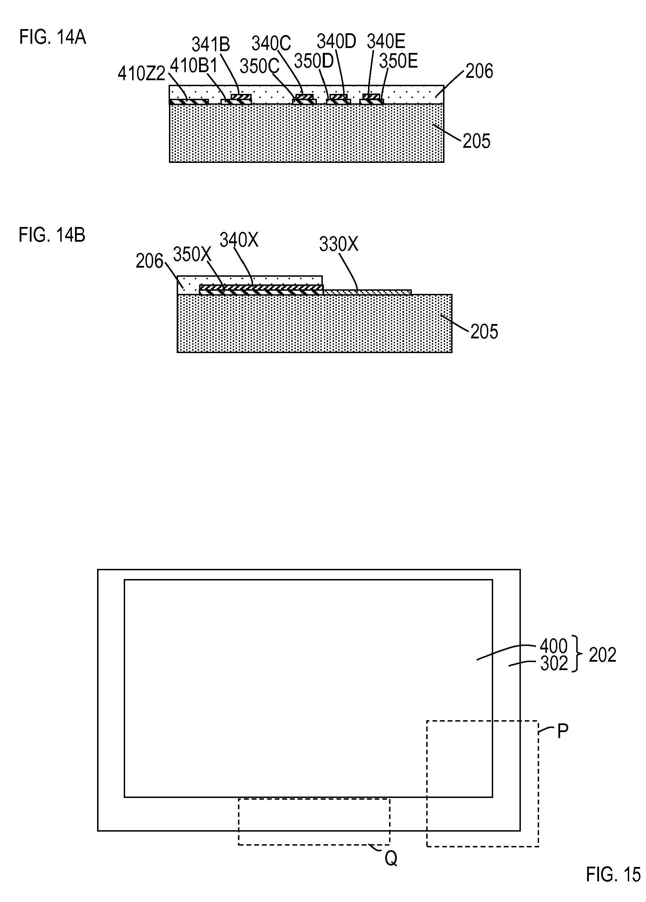

Fig. 11 is a diagram illustrating an outline of a touch panel in a second embodiment. A touch panel 201 has a detection region 400 and a wiring region 301. Then, an external substrate 900 (not shown) is connected to a part of the wiring region 301. For example, the external substrate 900 may be bonded by thermocompression using an anisotropic conductive film (ACF). Fig. 12 is an enlarged view of a region P indicated by a dotted line in Fig. 11, and Fig. 13 is an enlarged view of a region Q indicated by a dotted line in Fig. 11. Fig. 14A and Fig. 14B are partial cross sectional views of a touch panel in the second embodiment. Fig. 14A is a cross sectional view along line S-S in Fig. 12, and Fig. 14B is a cross sectional view along line T-T in Fig. 13. The touch panel 201 in the second embodiment is provided with a transparent substrate 205, a plurality of sensor electrodes 410, a plurality of terminals 330, a plurality of conductive wires 340, a plurality of auxiliary wires 350, and a protective film 206. The substrate 205 has a size including both the detection region 400 and the wiring region 301. The substrate 205, the plurality of sensor electrodes 410, the plurality of terminals 330, and the protective film 206 are the same as those in the first embodiment, and therefore descriptions are omitted.

The plurality of auxiliary wires 350 are configured with auxiliary wires 350A, 350B, 350C, 350D, 350E, 350X, 350Y, 350Z, .... Each auxiliary wire is formed in the wiring region 301 on the substrate 205 and electrically connects any of the sensor electrodes and the terminal corresponding to the sensor electrode. For example, the auxiliary wire 350A electrically connects the sensor electrode 410A and the terminal 330A.

The plurality of conductive wires 340 are configured with conductive wires 340A, 340B, 340C, 340D, 340E, 340X, 340Y, 340Z, .... Each conductive wire is formed on the auxiliary wire and electrically connects any of the sensor electrodes and the terminal corresponding to the sensor electrode. For example, the conductive wire 340A is formed on the auxiliary wire 350A and electrically connects the sensor electrode 410A and the terminal 330A. In addition, in order to ensure the electrical connection of the conductive wire 340A and the sensor electrode 410A, a connection section (for example, 341A) of the same material as the conductive wire may be formed on the individual electrode 410A1.

In the present embodiment, as illustrated in Fig. 14A, the individual electrodes 410Z2, 410B1, the auxiliary wires 350C, 350D, 350E, 350X, and the terminal 330X are formed directly on the substrate 205. The connection section 341B and the conductive wires 340C, 340D, 340E, 340X are formed on the individual electrodes or the auxiliary wires. In addition, the protective film 206 covers the entire substrate, except for the portions required to connect the terminals (for example, 330X) to the external substrate.

Then, the conductive wires are formed with a material having electrical resistivity lower than that of the auxiliary wires, and the auxiliary wires are formed with a material less prone to corrosion than that of the conductive wires (a material excellent in durability). In addition, when the width of the auxiliary wires is wider than the width of the conductive wires, it is possible to form the conductive wires on the auxiliary wires securely even when there is a gap between patterns. More specifically, metal such as aluminum, copper, or silver or an alloy of aluminum may be used for the conductive wires. Examples of aluminum alloys include an alloy of aluminum and niobium. Alloys of molybdenum and niobium with an alloy of aluminum and niobium interposed therebetween may also be used for the conductive wires. Use of ITO or carbon makes the auxiliary wires less prone to corrosion. For pattern formation of the conductive wires and the auxiliary wires, techniques such as sputtering, etching, and printing may be used depending on the material. If the material of the auxiliary wires and the terminals is the same as the sensor electrodes, when the individual electrodes (for example, 410A1, 410A2, and so forth) of the plurality of sensor electrodes 410 are formed, the auxiliary wires and the terminals may also be formed.

According to the touch panel 201 in the second embodiment, it is possible to obtain effects similar to those of the touch panel in the first embodiment. Then, since auxiliary electrodes exist between the conductive wires and the substrate, it is possible to prevent corrosion of conductive electrodes due to the influence of sodium ions and the like from the substrate even when the substrate is glass. Further, even without providing the electrically connected portions (for example, 321A) illustrated in the modification of the first embodiment, the conductive wires (for example, 340A) and the auxiliary wires (for example, 350A) are electrically connected continuously between the sensor electrodes (for example, 410A) and the terminals (for example, 330A). Therefore, even if a conductive wire is broken, only the broken portion is electrically connected only by the auxiliary wires and other portions are electrically connected also by the conductive wire. Accordingly, there is almost no increase in electrical resistance due to the break of the conductive wire. Therefore, a touch panel may be even less likely to fail than the touch panels in the first embodiment and the modification of the first embodiment.

### [THIRD EMBODIMENT]

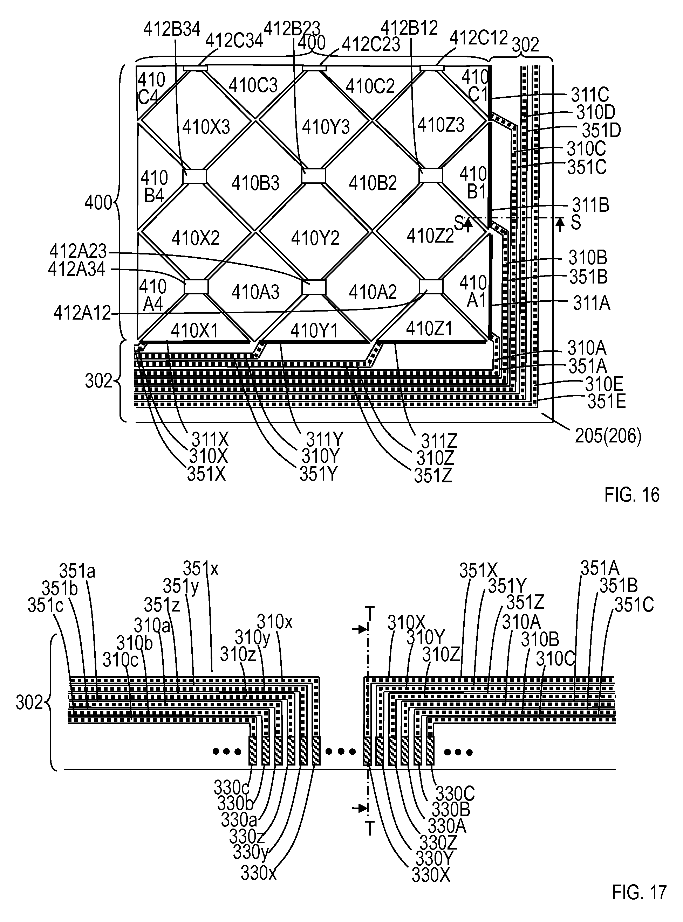

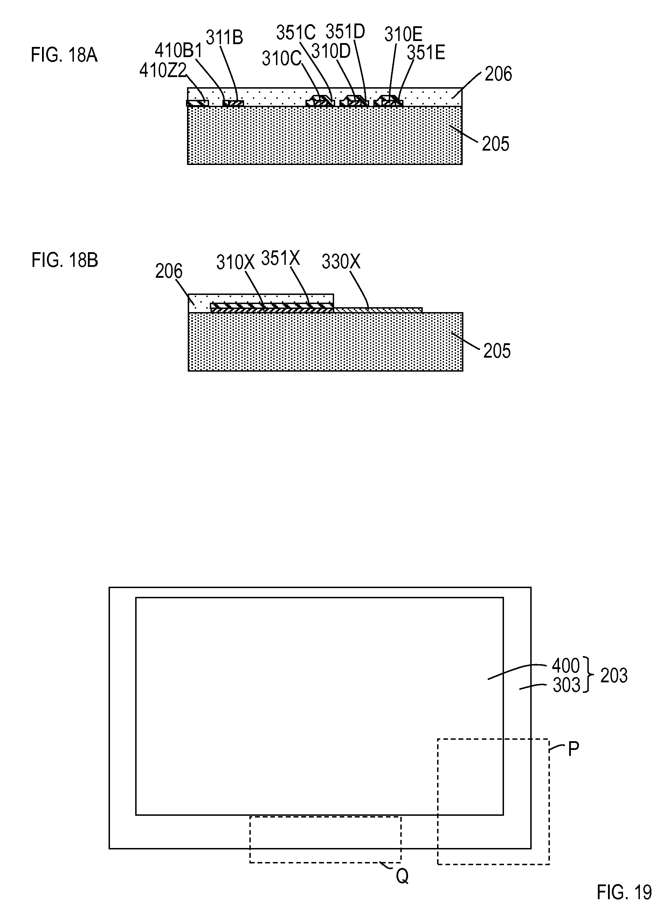

Fig. 15 is a diagram illustrating an outline of a touch panel in a third embodiment. A touch panel 202 has a detection region 400 and a wiring region 302. Then, an external substrate 900 (not shown) is connected to a part of the wiring region 302. For example, the external substrate 900 may be bonded by thermocompression using an anisotropic conductive film (ACF). Fig. 16 is an enlarged view of a region P indicated by a dotted line in Fig. 15, and Fig. 17 is an enlarged view of a region Q indicated by a dotted line in Fig. 15. Fig. 18A and Fig. 18B are partial cross sectional views of a touch panel in the third embodiment. Fig. 18A is a cross sectional view along line S-S in Fig. 16, and Fig. 18B is a cross sectional view along line T-T in Fig. 17. The touch panel 202 in the third embodiment is provided with a transparent substrate 205, a plurality of sensor electrodes 410, a plurality of terminals 330, a plurality of conductive wires 310, a plurality of auxiliary wires 351, and a protective film 206. The substrate 205 has a size including both the detection region 400 and the wiring region 302. The substrate 205, the plurality of sensor electrodes 410, the plurality of terminals 330, the plurality of conductive wires 310, and the protective film 206 are the same as those in the first embodiment, and therefore descriptions are omitted.

The plurality of auxiliary wires 351 are configured with auxiliary wires 351A, 351B, 351C, 351D, 351E, 351X, 351Y, 351Z, .... Each auxiliary wire is formed so as to cover the plurality of conductive wires 310 and electrically connects any of the sensor electrodes and the terminal corresponding to the sensor electrode. For example, the auxiliary wire 351A electrically connects the sensor electrode 410A and the terminal 330A.

In the present embodiment, as illustrated in Fig. 18A, the individual electrodes 410Z2, 410B1, the connection section 311B, the conductive wires 310C, 310D, 310E, 310X, and the terminal 330X are formed directly on the substrate 205. The auxiliary wires 351C, 351D, 351E, 351X are formed so as to cover the conductive wires. In addition, a protective film 206 covers the entire substrate, except for the portions required to connect the terminals (for example, 330X) to the external substrate.

Then, the conductive wires are formed with a material having electrical resistivity lower than that of the auxiliary wires, and the auxiliary wires are formed with a material less prone to corrosion than that of the conductive wires (a material excellent in durability). In addition, when the width of the auxiliary wires is wider than the width of the conductive wires, it is possible to cover the conductive wires with the auxiliary wires securely even there is a gap between patterns. More specifically, use of ITO or carbon makes the auxiliary wires less prone to corrosion. For pattern formation of the conductive wires and the auxiliary wires, techniques such as sputtering, etching, and printing may be used depending on the material. If the material of the auxiliary wires is the same as the sensor electrodes, when the individual connection electrodes (for example, 412A12, 412A23, and so forth) of the plurality of sensor electrodes 410 are formed, the auxiliary wires may also be formed.

According to the touch panel 202 in the third embodiment, it is possible to obtain effects similar to those of the touch panel in the first embodiment. Then, since auxiliary electrodes cover the conductive wires, it is possible to reduce corrosion of conductive electrodes due to moisture and the like entering from the protective film 206 side. In addition, the conductive wires do not always have to be fully covered with the auxiliary wires, and a part of the conductive wires may be exposed. In that case, although this embodiment is inferior in corrosion resistance to embodiments in which the conductive wires are fully covered, it is possible to obtain effects at least equivalent to the second embodiment. Even without providing the electrically connected portions (for example, 321A) illustrated in the modification of the first embodiment, the conductive wires (for example, 310A) and the auxiliary wires (for example, 351A) are electrically connected continuously between the sensor electrodes (for example, 410A) and the terminals (for example, 330A). Therefore, even when a conductive wire is broken, only the broken portion is electrically connected only by the auxiliary wires and other portions are electrically connected also by the conductive wire. Accordingly, there is almost no increase in electrical resistance due to the break of the conductive wire. Therefore, a touch panel may be even less likely to fail than the touch panels in the first embodiment and the modification of the first embodiment.

### [FOURTH EMBODIMENT]

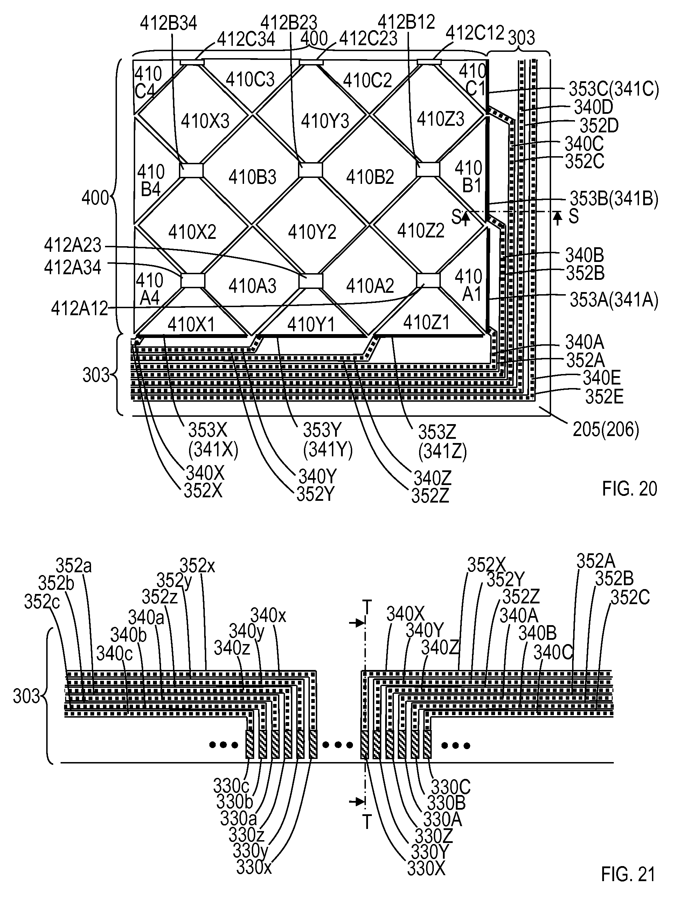

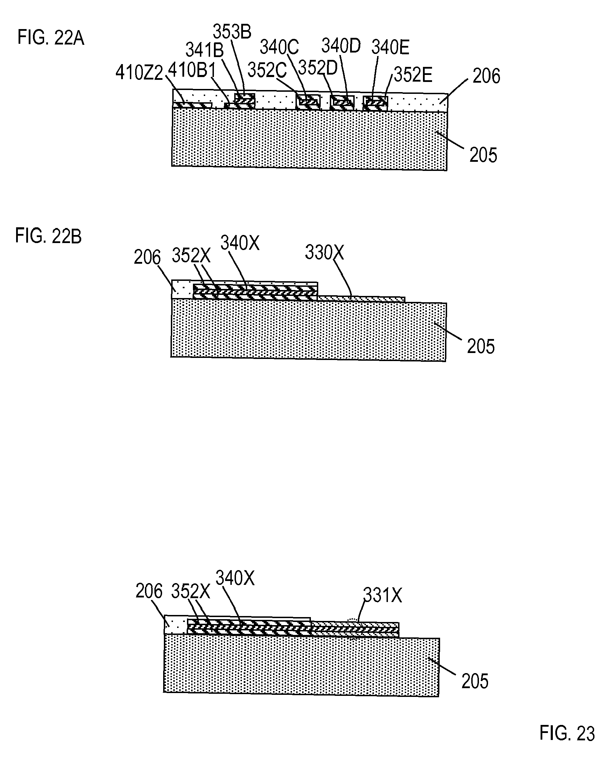

Fig. 19 is a diagram illustrating an outline of a touch panel in a fourth embodiment. A touch panel 203 has a detection region 400 and a wiring region 303. Then, an external substrate 900 (not shown) is connected to a part of the wiring region 303. For example, the external substrate 900 may be bonded by thermocompression using an anisotropic conductive film (ACF). Fig. 20 is an enlarged view of a region P indicated by a dotted line in Fig. 19, and Fig. 21 is an enlarged view of a region Q indicated by a dotted line in Fig. 19. Fig. 22A and Fig. 22B are partial cross sectional views of a touch panel in the fourth embodiment. Fig. 22A is a cross sectional view along line S-S in Fig. 20, and Fig. 22B is a cross sectional view along line T-T in Fig. 21. The touch panel 203 in the fourth embodiment is provided with a transparent substrate 205, a plurality of sensor electrodes 410, a plurality of terminals 330, a plurality of conductive wires 340, a plurality of auxiliary wires 352, and a protective film 206. The substrate 205 has a size including both the detection region 400 and the wiring region 303. The substrate 205, the plurality of sensor electrodes 410, the plurality of terminals 330, and the protective film 206 are the same as those in the first embodiment, and therefore descriptions are omitted.

The plurality of auxiliary wires 352 are configured with auxiliary wires 352A, 352B, 352C, 352D, 352E, 352X, 352Y, 352Z, .... Each auxiliary wire is formed in the wiring region 303 on the substrate 205 and electrically connects any of the sensor electrodes and the terminal corresponding to the sensor electrode. For example, the auxiliary wire 352A electrically connects the sensor electrode 410A and the terminal 330A.

The plurality of conductive wires 340 are configured with conductive wires 340A, 340B, 340C, 340D, 340E, 340X, 340Y, 340Z, .... Each conductive wire is formed so as to be interposed between at least the auxiliary wires and electrically connects any of the sensor electrodes and the terminal corresponding to the sensor electrode. For example, the conductive wire 340A is formed so as to be interposed between the auxiliary wires 352A and electrically connects the sensor electrode 410A and the terminal 330A. As illustrated in Fig. 22A, each conductive wire may also be formed so as to be surrounded by the auxiliary wires. In addition, in order to ensure the electrical connection of the conductive wire 340A and the sensor electrode 410A, a connection section (for example, 341B) of the same material as the conductive wire may be formed on the individual electrodes 410B1. In this case, the connection sections (for example, 341B) may be covered with the same material as the auxiliary wires (for example, 353B) (refer to Fig. 22A).

Then, the conductive wires are formed with a material having electrical resistivity lower than that of the auxiliary wires, and the auxiliary wires are formed with a material less prone to corrosion than that of the conductive wires (a material excellent in durability). More specifically, metal such as aluminum, copper, or silver or an alloy of aluminum may be used for the conductive wires. Examples of aluminum alloys include an alloy of aluminum and niobium. Alloys of molybdenum and niobium with an alloy of aluminum and niobium interposed therebetween may also be used for conductive wires. Use of ITO or carbon makes the auxiliary wires less prone to corrosion. For pattern formation of the conductive wires and the auxiliary wires, techniques such as sputtering, etching, and printing may be used depending on the material. If the material of the auxiliary wires and the terminals is ITO, when the individual electrodes (for example, 410A1, 410A2, and so forth) of the plurality of sensor electrodes 410 are formed, the auxiliary wires on the substrate side of the conductive wires may also be formed. Then, when the individual connection electrodes (for example, 412A12, 412A23, and so forth) of the plurality of sensor electrodes 410 are formed, the auxiliary wires on the upper side of the conductive wires may also be formed.

According to the touch panel 203 in the fourth embodiment, it is possible to obtain effects similar to those of the touch panel in the first embodiment. Then, since the conductive wires are interposed between auxiliary electrodes, it is possible to prevent corrosion of conductive electrodes due to the influence of sodium ions and the like from the substrate even when the substrate is glass. Further, it is also possible to reduce corrosion of the conductive wires due to moisture and the like entering from the protective film 206 side. In addition, even without providing the electrically connected portions (for example, 321A) illustrated in the modification of the first embodiment, the conductive wires (for example, 340A) and the auxiliary wires (for example, 352A) are electrically connected continuously between the sensor electrodes (for example, 410A) and the terminals (for example, 330A). Therefore, even when a conductive wire is broken, only the broken portion is electrically connected only by the auxiliary wires and other portions are electrically connected also by the conductive wire. Accordingly, there is almost no increase in electrical resistance due to the break of the conductive wire. Therefore, a touch panel may be even less likely to fail than the touch panels in the first embodiment and the modification of the first embodiment.

### [MODIFICATION]

In the touch panel 203 in the fourth embodiment, an example of the plurality of terminals 330 formed with one material is illustrated. Fig. 23 is a cross sectional view along line T-T in Fig. 21 when the structure of the terminals is altered. In this example, the plurality of terminals 330 are altered to a plurality of terminals 331. The terminal 331 is formed with, from the side closer to the substrate 205, a layer of a material less prone to corrosion, a layer of a material with low resistivity, and a layer of a material less prone to corrosion. Specifically, with a layer of the same material as the auxiliary wires, a layer of the same material as the conductive wires, and a layer of the same material as the auxiliary electrodes, the terminals may be formed together with the auxiliary wires and the conductive wires, and are thus easily processed. Then, it is possible to obtain effects similar to the fourth embodiment. The first through fourth embodiments are shown this time; in comparison with the first embodiment, the second through fourth embodiments may provide a touch panel in which the wire width is narrow and the conductive wires are less prone to corrosion, by overlapping the auxiliary wires and the conductive wires.

### [DESCRIPTION OF REFERENCE NUMERALS]

200, 201, 202, 203, 209 Touch Panel
205 Substrate
206 Protective Film
300, 301, 302, 303, 309 Wiring Region
310, 340 Plurality of Conductive Wires
310A, 310B, 310C, 310D, 310E, 310X, 310Y, 310Z, 340A, 340B, 340C, 340D, 340E, 340X, 340Y, 340Z Conductive wire
311A, 311B, 311C, 311X, 311Y, 311Z, 341A, 341B, 341C, 341X, 341Y, 341Z Connection Section
320, 350, 351 Plurality of Auxiliary Wires
320A, 320B, 320C, 320D, 320E, 320X, 320Y, 320Z, 350A, 350B, 350C, 350D, 350E, 350X, 350Y, 350Z, 351A, 351B, 351C, 351D, 351E, 351X, 351Y, 351Z, 352A, 352B, 352C, 352D, 352E, 352X, 352Y, 352Z Auxiliary Wire
330, 331, 380 Plurality of Terminals
330A, 330B, 330C, 330X, 330Y, 330Z, 330a, 330b, 330c, 330x, 330y, 330z, 380A, 380B, 380C, 380X, 380Y, 380Z, 380a, 380b, 380c, 380x, 380y, 380z Terminal
400 Detection Region
410 Plurality of Sensor Electrodes
410A, 410B, 410C, 410X, 410Y, 410Z Sensor Electrode
410A1, 410A2, 410A3, 410A4, 410B1, 410B2, 410B3, 410B4, 410C1, 410C2, 410C3, 410C4, 410X1, 410X2, 410X3, 410Y1, 410Y2, 410Y3, 410Z1, 410Z2, 410Z3 Individual Electrode
412A12, 412A23, 412A34, 412B12, 412B23, 412B34, 412C12, 412C23, 412C34, 412X12, 412X23, 412X34, 412Y12, 412Y23, 412Y34, 412Z12, 412Z23, 412Z34 Individual Connection Electrode
900 External Substrate

## Claims

1. A touch panel having a detection region and a wiring region, the touch panel comprising:
a transparent substrate having a size including the detection region and the wiring region;
a plurality of sensor electrodes made with transparent conductive members arranged and formed in the detection region;
a plurality of terminals formed in the wiring region to be connected to an external part and corresponding to the respective sensor electrodes;
a plurality of conductive wires formed in the wiring region and electrically connecting any of the sensor electrodes and the terminal corresponding to the sensor electrode; and
a plurality of auxiliary wires formed in the wiring region and electrically connecting any of the sensor electrodes and the terminal corresponding to the sensor electrode, wherein
the conductive wires are formed with a material having electrical resistivity lower than that of the auxiliary wires, and the auxiliary wires are formed with a material less prone to corrosion than that of the conductive wires.

2. The touch panel according to Claim 1, wherein
a portion in contact with the substrate and a portion in contact with the external part in the terminals are of the same material as the auxiliary wires.

3. The touch panel according to Claim 1 or 2, wherein
a material to form the auxiliary wires is the transparent conductive member.

4. The touch panel according to any one of Claims 1 through 3,
wherein
the conductive wire and the auxiliary wire electrically connecting the same sensor electrode and terminal are overlapped.

5. The touch panel according to Claim 4, wherein
the conductive wires are formed on the auxiliary wires that are formed directly on the substrate.

6. The touch panel according to Claim 4, wherein
the auxiliary wires are formed on the conductive wires that are formed directly on the substrate.

7. The touch panel according to Claim 4, wherein
the conductive wires and the auxiliary wires are formed in layers with an auxiliary wire, a conductive wire, and an auxiliary wire in that order on the substrate.

8. The touch panel according to any one of Claims 4 through 7,
wherein
the auxiliary wires have a wider width than that of the conductive wires.

9. The touch panel according to any one of Claims 1 through 3,
wherein
the conductive wires and the auxiliary wires are formed directly on the substrate, respectively, and
the conductive wire and the auxiliary wire electrically connecting the same sensor electrode and terminal have an electrically connected portion existing between the sensor electrode and the terminal.

10. The touch panel according to any one of Claims 1 through 9,
wherein
the wiring region is covered with a protective film with two or more layers including a layer formed with an organic material and a layer formed with an inorganic material.
